# EUROPÄISCHE PATENTSCHRIFT

(11) **EP 1 717 469 B1**
(45) Veröffentlichungstag und Bekanntmachung des Hinweises auf die Patenterteilung: **02.11.2011**
(21) Anmeldenummer: 06007233.7
(22) Anmeldetag: 06.04.2006
(51) Int. Cl.: F16C 33/20

(54) **Lagerelement**
Bearing element
Elément de palier

(30) Priorität: 29.04.2005 AT 7342005; 05.10.2005 AT 16252005
(43) Veröffentlichungstag der Anmeldung: 02.11.2006
(73) Patentinhaber: Miba Gleitlager GmbH, 4663 Laakirchen (AT)
(72) Erfinder: Lang, Hubert, 4332 Au an der Donau (AT)
(74) Vertreter: Ofner, Clemens

(56) Entgegenhaltungen:
- EP-A- 1 236 914
- EP-A- 1 342 806
- GB-A- 2 345 095

## Beschreibung

Die Erfindung betrifft ein Lagerelement mit einem metallischen Stützkörper, einer darüber angeordneten Lagermetallschicht sowie einer über dieser angeordneten Polymerschicht, wobei die Polymerschicht ein Polyimidharz, Molybdändisulfid (MOS₂) und Graphit umfasst, einen Motor mit einer Welle, die von einem Lagerelement gelagert ist, wobei das Lagerelement zumindest einen metallischen Stützkörper und eine darüber angeordnete Lagermetallschicht umfasst. Ein gattungsgemäßes Lagerelement ist beispielsweise aus der GB 2345095 A bekannt. Die EP 1764 522 A, Stand der Technik nach Artikel 54(3) EPÜ, zeigt ein weiteres lagerelement.

Beschichtungen tribologisch beanspruchter Bauteile bzw. Flächen sollen verschiedensten Anforderungen genügen. Zum einen wird eine möglichst reibungsarme Beschichtung gewünscht, welche relativ weich ist und sich dem zufolge gut an durch verschleißbedingten Abrieb sowie den Gleitpartner anpassen kann. Andererseits muss eine genügend hohe mechanische Stabilität und Festigkeit gegeben sein, um neben den statischen auch dynamische Schwingungsbelastungen aufnehmen zu können und somit die Dauerfestigkeit und die Lebensdauer zu steigern. Die Entwicklungen, beispielsweise in der Motorenindustrie, gehen in Richtung höherer spezifischer Leistungen, um insbesondere in Hinblick auf immer strenger werdende Abgasnormen den Wirkungsgrad und damit die Wirtschaftlichkeit und die Umweltverträglichkeit von Verbrennungskraftmaschinen zu erhöhen. Von dieser Entwicklung sind eine Vielzahl von Komponenten eines Verbrennungsmotors betroffen, wie beispielsweise die durch die sehr hohen Drehmomente und die zur Optimierung des Verbrennungsprozesses stetig steigenden Zünddrücke, beispielsweise eines direkteinspritzenden Turbodieselmotors, sehr hoch belasteten Radialgleitlager. Durch die leistungsfähigen Einspritzsysteme dieser Motoren werden ebenso die Komponenten der Einspritzpumpen und deren Messinstrumente bzw. durch die höheren Leistungen auch andere Bauteile, wie Stößel, Stifte oder Rollen, welche gleitbeansprucht werden, diesen hohen Belastungen ausgesetzt. Häufig werden Aluminiumlegierungen für diese Komponenten eingesetzt, da damit grundsätzlich ein gutes Verhältnis zwischen erzielbaren Eigenschaften und aufzuwendenden Kosten erreicht werden kann.

Jüngste Entwicklungen auf diesem Gebiet zeigen - obwohl deren prinzipieller Einsatz in diesem Bereich bereits seit einigen Jahren bekannt ist - vermehrt den Einsatz von so genannten Gleitlacken.

So beschreibt z.B. die DE 22 06 400 A einen Verbundwerkstoff mit metallischem Stützkörper und einer mittels Klebstoff mit dem Stützkörper verbundenen Reib- bzw. Gleitschicht aus thermisch hoch belastbaren Kunststoffen, die wärmhärtbare Polyimidharze und die Laufeigenschaften des Lagers verbessernde Zusätze, wie Polytetafluorethylen, metallische Lagerlegierungen oder dgl. enthält, wobei die Reib- bzw. die Gleitschicht die Polyimidharze und die die Laufeigenschaft verbessernden Zusätze als Gemisch feinkörniger oder feinpulvriger Form, und als Bindemittel Polyimid-Lack enthält, der sowohl das feinkörnige bzw. feinpulvrige Gemisch in der Reib- bzw. Gleitschicht zusammenbindet als auch die Reib- bzw. Gleitschicht selbst mit dem Stützkörper verbindet. Die Gleitschicht kann dabei zwischen 70 und 20 Gew.-% wärmehärtbare Polyimidharze und etwa 30 bis 80 Gew.-% selbstschmierende Zusätze enthalten. Als selbstschmierende Zusätze werden Graphit, Molybdändisulfid sowie Oxide genannt.

Aus der EP 0 939 106 A ist ein Gleitschichtmaterial bekannt, das als Matrixmaterial PTFE oder PTFE in Kombination mit anderen Fluorthermoplasten, deren Schmelzpunkt über 260° C liegt, enthält, wobei mindestens ein pulverförmiges Polyaramid enthalten ist, dessen Anteil bezogen auf die Gesamtmenge aus PTFE oder der Mischung aus PTFE und anderen Fluorthermoplasten und dem Polyaramid 10 bis 50 Vol.-% beträgt.

Auch in der EP 1 236 914 A ist ein Gleitlager beschrieben, welche eine Harzbeschichtung auf einer Lagermetallschicht aufweist, wobei die Harzbeschichtung ein wärmehärtbares Harz mit bestimmten physikalischen Eigenschaften in einer Menge von 70 bis 30 Vol.-% versetzt mit selbstschmierenden Zusätzen in einem Ausmaß von 30 bis 70 Vol.-% aufweist und wobei die Härte nach Vickers nicht größer als 20 ist. Das Harz kann beispielsweise ein Polyamidimidharz sein. Als selbstschmierende Zusätze werden Molybdändisulfid, Graphit, Bornitrid, Wolframdisulfid, Polytetrafluorethylen, Blei etc. genannt.

Polymere zur Verwendung als Beschichtungsmaterial von Gleitelementen werden auch noch in folgenden Dokumenten beschrieben:
US 5,525,246 A, JP 60-1424 A, EP 0 984 182 A, JP 04-83914 A, JP 07-247493 A, GB 2 337 306 A, JP 09-79262 A, JP 2001/173644 A, DE 20 00 632 A, DE 33 43 309 A, DE 32 21 785 A, WO 97/38046 A, EP 0 340 839 A, EP 0 044 577 A, EP 0 340 838 A, DE 24 15 327 A, EP 060 725 A, DE 198 14 756 A, US 4,618,270 A, DE 25 04 833 A, FR 21 33 320 A, GB 2 384 033 B, JP 53-007780 A.

Der Erfindung liegt die Aufgabe zugrunde, ein Lagerelement mit einer Polymerbeschichtung zur Verfügung zu stellen, welches verbesserte Eigenschaften aufweist.

Diese Aufgabe der Erfindung wird mit einem Lagerelement gemäß Anspruch 1 bzw. mit einem Motor gemäß Anspruch 12 gelöst.

Im Vergleich zu bereits im Gleitlagerbereich verwendeten Gleitlackbeschichtungen, zeigt die erfindungsgemäße Zusammensetzung überraschenderweise, trotz des hohen Anteils an MoS₂ und Graphit im Polyimidharz, eine nicht zu erwartende Verbesserung der Verschleißfestigkeit des Lagerelementes. Nicht zu erwartend deshalb, da mit abnehmenden Polyimidharz, das u.a. als Bindemittel für die reibungsvermindernden Zusätze angesehen werden kann, zu erwarten wäre, dass der Zusammenhalt der Schicht verschlechtert wird, dass diese letztendlich "zerbröselt". Durch den gewählten Anteil an MoS₂ und Graphit, insbesondere das Verhältnis des Anteils an MoS₂ zu Graphit, tritt dies nicht auf, wobei die Anmelderin zum gegenständlichen Zeitpunkt hierfür keine erklärende Theorie hat. Es wird jedoch eine Interaktion zwischen den MoS₂ - und Graphitteilchen vermutet.

Neben der verbesserten Verschleißfestigkeit wird mit dem erfindungsgemäßen Lagerelement weiters eine Verbesserung des Kavitationswiderstandes erreicht. Darüber hinaus wurde auch eine verminderte Korrosionsanfälligkeit festgestellt.

Erfindungsgemäß ist die Polymerschicht direkt auf die Lagermetallschicht aufgebracht, d.h. eine, bei herkömmlichen aus dem Stand der Technik bekannten Gleitlagern üblicherweise verwendete, Nickelschicht als Diffusionssperre ist nicht mehr erforderlich, sodass ein erfindungsgemäßes Lagerelement nicht nur hinsichtlich seiner mechanischen Eigenschaft zumindest gleichwertig mit üblichen Mehrschichtgleitlagern ist, sondern darüber hinaus ein entsprechender Kostenvorteil bei der Herstellung des erfindungsgemäßen Lagerelementes erzielt werden kann.

Weiters ist von Vorteil, dass die erfindungsgemäße Polymerschicht nicht auf spezielle Lagerelemente beschränkt ist, sondern nach derzeitigem Wissen auf jedem Lagermetall aufgetragen werden kann.

In der Vergangenheit kam es bei Aluminium-Lagerwerkstoffen zu Lagerausfällen, die vermutlich auf einem Materialübertrag und Mikroverschweißung des Lagerwerkstoffes auf die Welle, hervorgerufen durch Mikrobewegungen, zurückzuführen sind. Derartige Materialüberträge können auftreten, wenn die Welle ruhend auf dem Lager aufliegt, das ganze System aber Mikrobewegungen, z.B. beim Transport eines zusammengebauten Motors zum Einsatzort, oder dem Betrieb mehrerer Motoren nebeneinander, wobei nicht alle gleichzeitig laufen, durchführt. Beim erfindungsgemäßen Motor wird dies auf vorteilhafte Weise durch die Polymerschicht verhindert, da diese Schicht praktisch keine Affinität zum Stahl aufweist. Doch selbst wenn ein Materialübertrag im geringem Maße stattfindet, beispielsweise durch die Einbettung des Gleitlackes in das Rautiefenprofil der Welle, so stellt dies ebenfalls kein Problem dar, da eine sich in der Folge ausbildende Gleitlack - Gleitlack - Paarung einen noch niedrigen Reibwert als die Paarung Gleitlack-Stahl aufweist.

Ebenso ist es vorteilhaft, dass der Anteil von MoS₂ ausgewählt ist aus einem Bereich mit einer unteren Grenze von 17 % und einer oberen Grenze von 22 % bzw. einer unteren Grenze von 18,5 % und einer oberen Grenze von 21,5 % bzw. dass der Anteil von MoS₂ 20 % beträgt.

Des weiteren ist in Weiterbildungen vorgesehen, dass der Anteil an Graphit ausgewählt aus einem Bereich mit einer unteren Grenze von 7 % und einer oberen Grenze von 13 % bzw. einer oberen Grenze von 8,5 % und einer oberen Grenze von 11,5 % bzw. dass der Anteil an Graphit 10 % beträgt.

Bei all diesen Ausführungsvarianten - bzw. bei sämtlichen noch folgenden Angaben zu uneren und oberen Bereichsgrenzen - ist es möglich, dass die jeweiligen Anteile bei Bedarf auch aus den jeweiligen Randbereichen zwischen den unteren Grenzen bzw. oberen Grenzen ausgewählt werden.

Durch die voranstehend genannten Maßnahmen ist es nicht nur möglich eine Optimierung hinsichtlich sämtlicher Eigenschaften der Polymerschicht zu erreichen, sondern ist es damit auch möglich gezielt einzelne Eigenschaften, wie z.B. die Verschleißfestigkeit, Korrosionsbeständigkeit, den Widerstand gegen die Reibverschweißung, etc., an den jeweiligen Einsatzfall anzupassen, selbst wenn damit einhergeht, dass die weiteren Eigenschaften der Polymerschicht nicht im selben Ausmaß verbessert werden.

Die MoS₂ -Plättchen können eine mittlere Länge, ausgewählt aus einem Bereich mit einer unteren Grenze von 10 µm und einer oberen Grenze von 40 µm bzw. einer unteren Grenze von 15 µm und einer oberen Grenze von 35 µm bzw. einer unteren Grenze von 18 µm und einer oberen Grenze von 25 µm und/oder eine mittlere Breite, ausgewählt aus einem Bereich mit einer unteren Grenze von 10 µm und einer oberen Grenze von 40 µm, bzw. einer unteren Grenze von 15 µm und einer oberen Grenze von 35 µm, bzw. einer unteren Grenze von 18 µm und einer oberen Grenze von 25 µm und/oder eine mittlere Höhe, ausgewählt aus einem Bereich mit einer unteren Grenze von 2 nm und einer oberen Grenze von 20 nm bzw. einer unteren Grenze von 5 nm und einer oberen Grenze von 15 nm bzw. einer unteren Grenze von 5 nm und einer oberen Grenze von 8 nm ausgewählt sein.

Ebenso ist es möglich, dass ein Graphit mit einer Korngröße, ausgewählt aus einem Bereich mit einer unteren Grenze von 2 µm und einer oberen Grenze von 8 µm enthalten ist.

Das Verhältnis von MoS₂ zu Graphit kann gemäß einer Weiterbildung der Erfindung ausgewählt sein aus einem Bereich mit einer unteren Grenze von 1,5 : 1 und einer oberen Grenze von 4,5 : 1.

Es kann damit das selbstschmierende Verhalten der Polymerschicht über weite Grenzen variiert werden, sodass gegebenenfalls unter Berücksichtigung der jeweiligen Anteile an MoS₂ bzw. Graphit, d.h. bei Variierung der Anteilsverhältnisse diese beiden Zusatzstoffe zum Polyimidharz, wiederum zumindest einen der Eigenschaften der Polymerschicht dem jeweiligen Anwendungsfall besonders angepasst werden kann.

Die Lagermetallschicht kann durch eine Legierung gebildet sein, ausgewählt aus einer Gruppe umfassend Aluminiumbasislegierungen, Zinnbasislegierungen, Bleibasislegierungen, Kupferbasislegierungen, CuPb-Basislegierungen, AlSn-Basislegierungen, Legierungen auf AlZn-, AlSi-, AlSnSi-, CuAl-, CuSn-, CuZn-, CuSnZn-, CuZnSn-, CuBi- sowie AlBi-Basis, wobei diese hinlänglich in Bezug auf ihre Eigenschaften aus der einschlägigen Literatur zu Lagerelementen bekannt sind, sodass sich eine weitere Erörterung an dieser Stelle erübrigt. Es wird dadurch der Vorteil erreicht, dass die Haftfestigkeit der Polymerschicht auf diesen Lagermetallstoffen auch ohne die Verwendung von gegebenenfalls erforderlichen Haftvermittlerschichten verbessert ist.

Die Polymerschicht ist direkt auf der Lagermetall-schicht anzuordnen, sodass auf üblicherweise verwendete Diffusionssperrschichten, wie z.B. Nickeldämme, verzichtet werden kann.

Ebenso ist es möglich, insbesondere bei einer ausreichenden Haftfestigkeit, dass die Lagermetallschicht direkt auf dem Stützkörper angeordnet ist, also wiederum ohne die Anordnung von Zwischenschichten und Haftvermittlern, wodurch sich der Aufbau des Lagerelementes vereinfachen lässt und damit gegebenenfalls auch die Herstellungskosten gesenkt werden können.

Als vorteilhaft hat sich im Zuge der Erprobung des erfindungsgemäßen Lagerelementes auch herausgestellt, dass es von Vorteil ist, wenn die Oberfläche der Polymerschicht einen arithmetischen Mittenrauwert Ra nach DIN EN ISO 4287 bzw. ASME B 46.1 aufweist, ausgewählt aus einem Bereich mit einer unteren Grenze von 0,2 µm und einer oberen Grenze von 1,5 µm bzw. einer unteren Grenze von 0,5 µm und einer oberen Grenze von 1,0 µm bzw. einer unteren Grenze von 0,8 µm und einer oberen Grenze von 0,9 µm, bzw. wenn gemäß weiteren Ausführungsvarianten die Oberfläche der Polymerschicht eine maximale Rauheitsprofilhöhe Rz nach DIN EN ISO 4287 bzw. ASME B 46.1 aufweist, ausgewählt aus einem Bereich mit einer unteren Grenze von 0,5 µm und einer oberen Grenze von 10 µm bzw. einer unteren Grenze von 3 µm und einer oberen Grenze von 8 µm bzw. einer unteren Grenze von 5 µm und einer oberen Grenze von 6 µm.

Durch diese Maßnahmen wird einerseits erreicht, dass während der Einlaufphase aufgrund der Profilspitzen eine - in Bezug auf die gesamte innere Oberfläche des Lagerelementes gesehen - geringere Kontaktfläche zur zu lagernden Welle ausgebildet wird und damit eine geringere Reibung, als allein aufgrund der Materialauswahl bzw. einer Polyimidharz-Stahl-Paarung zu erwarten wäre, vorherrscht und andererseits nach dieser Einlaufphase dieser Spitzen gegebenenfalls soweit abgeschliffen sind, dass die Lagerung die erforderlichen Spieltoleranzen aufweist.

Die Polymerschicht kann eine mittlere Dicke aufweisen, ausgewählt aus einem Bereich mit einer unteren Grenze von 1 µm und einer oberen Grenze von 40 µm bzw. einer unteren Grenze von 3 µm und einer oberen Grenze von 30 µm bzw. einer unteren Grenze von 4 µm und einer oberen Grenze von 25 µm, wodurch das Lagerelement wiederum an den jeweiligen Anwendungsfall, wie z.B. Großlager oder Kleinlager, angepasst werden kann und damit bei langfristig zuverlässig sichergestellten, gleichbleibenden Eigenschaften des Lagerelementes eine entsprechende Kostenoptimierung erzielbar ist.

Die Polymerschicht weist vorteilhafterweise eine Härte nach Vickers auf, ausgewählt aus einem Bereich mit einer unteren Grenze von 20 HV und einer oberen Grenze von 45 HV, bzw. einer unteren Grenze von 22 HV und einer oberen Grenze von 35 HV bzw. einer unteren Grenze von 25 HV und einer oberen Grenze von 30 HV, wodurch entsprechend verbesserte Gleiteigenschaften bei ausreichender Dauerstandsfestigkeit des Lagerelementes erreicht werden.

Insbesondere ist das Lagerelement als Gleitlagerschale bzw. -halbschale oder Lagerbuchse ausgebildet.

Es wird damit möglich, Motoren direkt beim Erzeuger fertig zu stellen, ohne besondere Vorkehrungen treffen zu müssen bzw. ohne Gefahr zu laufen, dass aufgrund des Transportes der bereits fertigen Motoren eine Materialverschweißung des Lagerwerkstoffes auf der Welle stattfindet. Es ist somit möglich derartige Komponenten vormontiert an die jeweiligen Abnehmer, insbesondere die Automobilindustrie, welche bekanntlich den Weg beschreitet, vermehrt fertige Komponenten anzukaufen, mit geringeren Ausfallsquoten der Komponenten zu liefern.

Zum besseren Verständnis der Erfindung wird diese anhand der nachfolgenden Figuren näher erläutert.

Es zeigen jeweils in schematisch vereinfachter Darstellung:
- Fig. 1: ein erfindungsgemäßes Lagerelement in Form einer Gleitlagerhalbschale;
- Fig. 2: ein Diagramm, in dem die jeweilige Grenzlast in Abhängigkeit von variierenden Anteilen an MoS₂ und Graphit, dargestellt ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

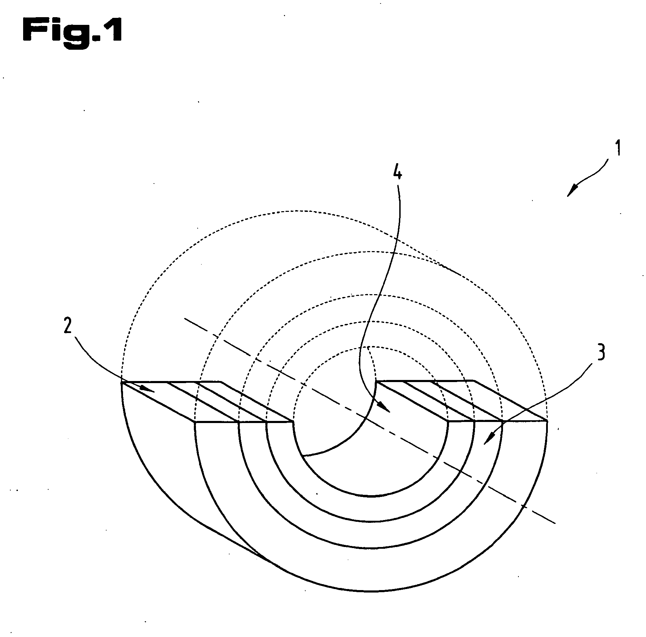

Das Lagerelement 1 nach Fig. 1 ist aus einem Stützkörper 2, einer Lagermetallschicht 3 sowie einer Polymerschicht 4 als Laufschicht aufgebaut. Der Stützkörper 2 besteht üblicherweise aus Stahl, kann aber selbstverständlich auch aus vergleichbaren Werkstoffen bestehen, mit welchen die selbe bzw. eine ähnliche Funktion, nämlich die Bereitstellung der mechanischen Festigkeit des Lagerelementes 1, realisiert werden kann. Die mechanische Festigkeit des gesamten Lagerelementes 1 ist dabei abhängig vom jeweiligen Einsatzgebiet, sodass beispielsweise auch verschiedenste Kupferlegierungen, wie z.B. Messing, Bronzen, Verwendung finden können. Zudem wird durch den Stützkörper 2 eine gewisse Formstabilität gewährleistet.

Die Lagermetallschicht 3 ist durch eine Lagermetalllegierung gebildet. Diese besteht bei diesem Ausführungsbeispiel aus einer Aluminiummatrix in der zumindest eine Weichphase sowie Hartpartikel eingelagert sind. Die zumindest eine Weichphase kann dabei durch zumindest ein Element aus einer ersten Elementgruppe umfassend Zinn, Antimon, Indium und Wismut gebildet sein. Die Hartpartikel können z.B. aus zumindest einem Element aus einer zweiten Elementgruppe umfassend Kupfer, Mangan, Kobalt, Chrom und Eisen bzw. durch die Elemente Scandium und/oder Zirkonium gebildet sein. Ebenfalls möglich ist, dass diese Hartpartikel durch intermetallische Phasen insbesondere aus den letztgenannten Elementen bzw. den Elementen der zweiten Elementgruppe mit Aluminium bzw. durch aus den genannten Elementen gebildete intermetallische Phasen aufgebaut sind.

Selbstverständlich können aber auch jegliche andere, aus dem Stand der Technik bekannte Weichphasen und/oder Hartpartikel in der Lagermetalllegierung enthalten sein.

Mit Hilfe der Weichphase ist es möglich, dem Lagerelement 1 Notlaufeigenschaften zu verleihen, wenn in der Polymerschicht 4 infolge des Betriebes des Lagerelementes 1 Fehlstellen entstehen und somit die Lagermetallschicht 3 zumindest annähernd direkt mit einem zu lagernden Bauteil, wie z.B. einer Welle, in Kontakt kommt. Es wird damit dem Lagerelement 1 auch eine Einbettfähigkeit für aus dem Abrieb infolge der Verwendung des Lagerelementes 1 stammende Festpartikel verliehen. Die Hartpartikel verleihen der Aluminiumlegierung die erforderliche mechanische Festigkeit.

Als Lagermetallschicht 3 eignen sich insbesondere Legierungen auf Zinn-, Wismut-, Indium-, Blei- oder Aluminiumbasis sowie Legierungen auf, gegebenenfalls hochbleihältiger, CuPboder auf AlSn- bzw. auf AlBi-Basis. Insbesondere sind höherzinnhältige Zinnbasislegierungen von Vorteil. Auch bleifrei Kupferbasislegierungen sind verwendbar.

Einsetzbare Lagermetalle auf Kupferbasis wären beispielsweise CuPb22Sn2, CuPb10Sn10, CuPb15Sn7, CuSn6, CuSn4 Zn1. Insbesondere bleifreie Kupferlegierungen auf CuAl-, CuSn-, CuZn-, CuSnZn-, CuZnSn- sowie CuBi-Basis sind in Hinblick auf die geringere Umweltbelastung von Vorteil.

Einsetzbare Lagermetalle auf Zinnbasis wären beispielsweise SnSb8Cu4, SnSb12Cu6Pb.

Einsetzbare Lagermetalle auf Bleibasis wären beispielsweise PbSb10Sn6, PbSb15Sn10, PbSbI5SnAs.

Lagermetalle auf Aluminumbasis können z.B. AlSn40, AlSn20, AlSn25, AlSn10, AlSn6, etc. bilden.

Es ist weiters möglich Lagermetalle auf AlZn-Basis, wie z.B. AlZn4SiPb, oder AlSi-Basis, wie z.B. A1Si11CuMgNi, oder Alsnsi-Basis, wie z.B. AlSn20Si4, zu verwenden.

Die Polymerschicht besteht 4 aus einem Polyamidimidharz, Molybdändisulfid, sowie Graphit, wobei der Anteil des Polyamidimidharzes an der Polymerschicht 4 ausgewählt ist aus einem Bereich mit einer unteren Grenze von 60 % und einer oberen Grenze von 80 %, der Anteil MoS₂, ausgewählt aus einem Bereich mit einer unteren Grenze von 15 % und einer oberen Grenze von 25 % und der Anteil an Graphit, ausgewählt aus einem Bereich mit einer unteren Grenze von 5 % und einer oberen Grenze von 15%.

Das Harz kann in zumindest einem Lösungsmittel vorliegen, insbesondere einem organischen Lösungsmittel, wie z.B. Xylol, wodurch die Verarbeitbarkeit erleichtert werden kann. Der Lösungsmittelanteil kann dabei ausgewählt sein aus einem Bereich mit einer unteren Grenze von 40 Gew.-% und einer oberen Grenze von 80 Gew.-%, insbesondere mit einer unteren Grenze von 50 Gew.-% und einer oberen Grenze von 70 Gew.-%, vorzugsweise mit einer unteren Grenze von 60 Gew.-% und einer oberen Grenze von 65 Gew.-%, bezogen auf den Harzanteil, d.h. Harz mit Lösungsmittel. Es kann somit der trockene Harzanteil, insbesondere des Polyamidimidharzes, ausgewählt sein aus einem Bereich mit einer unteren Grenze von 20 Gew.-% und einer oberen Grenze von 50 Gew.-%, insbesondere einer unteren Grenze von 30 Gew.-% und einer oberen Grenze von 40 Gew.-%, vorzugsweise einer unteren Grenze von 35 Gew.-% und einer oberen Grenze von 37,5 Gew.-%. Bezogen hierauf kann eine erfindungsgemäß aufgebrachte Polymerschicht 4 beispielsweise eine trockene Zusammensetzung von 35 Gew.-% Polyamidimidharz, 45 Gew.-% MoS₂ und 20 Gew.-% Graphit aufweisen bzw. eine trockene Zusammensetzung die sich aus den angegebenen Wertebereichen für die einzelnen Inhaltstoffe der Polymerschicht 4 errechnet.

Es ist insbesondere auch von Vorteil, wenn ein Verhältnis zwischen den Anteilen von MoS₂ und Graphit in der Polymerschicht 4 ausgewählt ist aus einem Bereich von 1,5:1 bis 4,5:1, beispielsweise 1,5:1 bis 2,5:1.

Mit der erfindungsgemäßen Zusammensetzung für die Polymerschicht 4 ist es möglich, eine Laufschicht mit guten Gleit- und Notlaufeigenschaften, die gegebenenfalls sogar einen Trockenlauf ermöglicht, zu realisieren. Diese zeichnet sich insbesondere durch Wartungsarmut auf. Es ist ein schmierstoffarmer bzw. schmierstofffreier Betrieb möglich. Gebendenfalls lässt sich eine Schmierung durch Wasser erzielen, was insbesondere von Vorteil ist, wenn das erfindungsgemäße Lagerelement 1 z.B. für Pumpen verwendet wird. Neben einer entsprechenden Gewichtsreduzierung ist auch eine geringere Kantenpressungsempfindlichkeit beobachtbar.

Das erfindungsgemäße Lagerelement 1 kann anstelle der Ausbildung als Gleitlagerhalbschale, wie in Fig. 1 dargestellt, auch anderwärtig verwendet werden, beispielsweise als Anlaufring, Gleitbuchse, etc., insbesondere zur Verwendung in der Motorenindustrie.

In der Tabelle 1 sind Beispiele für Zusammensetzungen, ausgewählt aus den erfindungsgemäßen Bereichen der Anteile des Polyimidharzes mit zu entfernendem Lösungsmittel, von MoS₂ sowie Graphit für die Polymerschicht 4 zusammengestellt, wobei diese selbstverständlich nicht beschränkend für die Erfindung verstanden werden sollen, sondern diese Beispiele lediglich den Erfindungscharakter belegen.

**Tabelle 1:**

| Nr. | PA I (%) | MoS₂ (%) | Graphit (%) |
|---|---|---|---|
| 1 | 60 | 25 | 15 |
| 2 | 62 | 25 | 13 |
| 3 | 65 | 20 | 15 |
| 4 | 68 | 17 | 15 |
| 5 | 70 | 20 | 10 |
| 6 | 72 | 20 | 8 |
| 7 | 61 | 25 | 14 |
| 8 | 65 | 23 | 12 |
| 9 | 70 | 25 | 5 |
| 10 | 75 | 15 | 10 |
| 11 | 65 | 25 | 10 |
| 12 | 77 | 15 | 8 |
| 13 | 78 | 12 | 10 |
| 14 | 80 | 15 | 5 |

Mit diesen Zusammensetzung wurden jeweils Lagerelemente 1 hergestellt, bestehend aus einer Stahlstützschale, auf der ein CuPb22Sn2 Lagermetall und darauf die Polymerschicht 4 aufgebracht ist. Es hat sich in den folgenden Untersuchungen gezeigt, dass sich mit diesen Zusammensetzung sehr ähnliche Eigenschaften des Lagerelementes 1 ergeben, sodass im Folgenden lediglich beispielhaft diese Eigenschaften anhand eines Lagerelementes 1 diskutiert werden mit einer Polymerschicht 4, enthaltend 70 % Polyimidharz, 20 % MoS₂ und 10 % Graphit.

Bezogen auf eine Grenzlast gegen Reibverschweißung von 100 % für dieses erfindungsgemäße Lager zeigt im Vergleich dazu ein Standardlager aus dem Stand der Technik mit einer PTFE-Beschichtung auf AlSn 40 lediglich einen um ca. 87 % schlechteren Wert unter denselben Versuchsbedingungen.

Die Verschleißfestigkeit wurde an einem Lager mit denselben Abmessungen und denselben Schmierbedingungen gemessen. Es hat sich gezeigt, dass die erfindungsgemäße Polymerschicht 4 im Vergleich mit einer PTFE-Schicht einem ca. 8 mal besseren Wert bzgl. der Verschleißfestigkeit erreicht.

Bei weiterführenden Untersuchungen wurde die erfindungsgemäße Polymerschicht 4 dieser Zusammensetzung zum einen auch auf eine Lagermetallschicht aus CuPb22Sn2 bzw. AlSn 25 aufgetragen und konnte dabei herausgefunden werden, dass die Verschleißfestigkeit innerhalb von +/- 5 % von jenem Wert, der mit AlSn40 erreicht wird, variiert, woraus folgt, dass die erfindungsgemäße Polymerschicht 4 zumindest auf allen gängigen Lagermetallen aufgetragen werden kann, ohne dass sich die hervorragenden Eigenschaften gravierend ändern.

Auch hinsichtlich der Korrosion konnten entsprechende Verbesserungen erreicht werden.

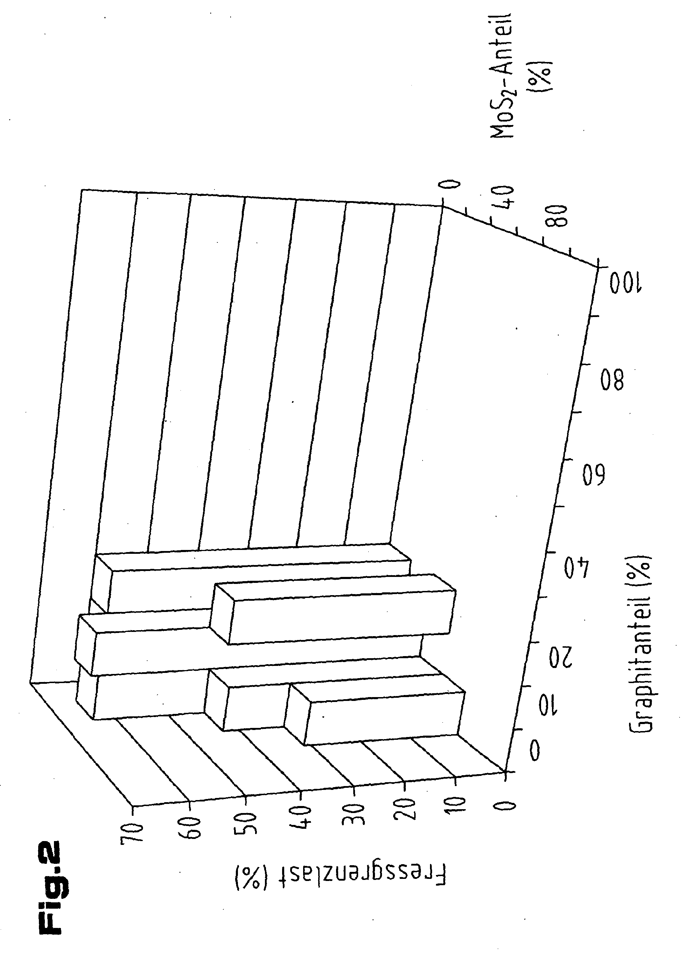

In Fig. 2 ist die Fressgrenzlast in Prozent gegen den Graphitanteil sowie den MoS₂-Anteil jeweils in Prozent aufgetragen, wobei für die Zusammensetzung 70 % Harz, 20 % MoS₂ und 10 % Graphit der Wert 100 % normiert ist, und können die jeweils erreichten Werte aus Tabelle 2 entnommen werden. Aus dieser Grafik ist sehr deutlich erkennbar, dass die erfindungsgemäße zusammengesetzte Polymerschicht 4, d.h. damit versehene Lagerelemente 1 deutlich bessere Werte hinsichtlich der Fressgrenzlast aufweisen, als dies bei entsprechenden Polyimidharzschichten, welche aus dem Stand der Technik bekannt sind, der Fall ist.

**Tabelle 2:**

| Graphit [%] | 5 | 10 | 15 |
|---|---|---|---|
| MoS₂ [%] | | | |
| 15 | | | 91,8 |
| 20 | 98 | 100 | |
| 40 | 65,8 | | 67,4 |
| 60 | 47,5 | | |

Im Hinblick auf das selbstschmierende Verhalten wurde gefunden, dass eine Verbesserung der Eigenschaften erreicht werden kann, wenn MoS₂-Plättchen eingesetzt werden, mit den bereits eingangs erwähnten Abmessungen.

Ebenso ist es von Vorteil, wenn der Graphit mit einer Korngröße ausgewählt aus einem Bereich mit einer unteren Grenze von 2 µm und einer oberen Grenze von 8 µm eingesetzt wird.

Eine weitere Verbesserung der Eigenschaften, insbesondere der Verschleißbeständigkeit gegenüber Kavitation sowie der Korrosionsbeständigkeit, sowohl im Einlaufverhalten als auch im Dauerlaufbetrieb, ist zu erreichen, wenn mit der erfindungsgemäß zusammengesetzten Polymerschicht 4 ein Lagerelement 1 hergestellt wird, bei dem diese Polymerschicht 4 ein Rauheitsprofil aufweist, mit Werten für die Rauheitsprofilhöhe Rz nach den DIN ISO 4287 bzw. ASME B 46.1bzw. arithmetischen Mittenrauwerten Ra ebenfalls nach dem DIN ISO 4287 bzw. ASME B 46.1, entsprechend den bereits angeführten Werten bzw. ausgewählt aus den angeführten Bereichen.

Die Herstellung des erfindungsgemäßen Lagerelementes 1 erfolgt derart, dass auf einen metallischen Stützkörper 2 die Lagermetallschicht 3 mit aus dem Stand der Technik bekannten Verfahren, wie z.B. Walzen, Gießen, Sintern, elektrolytische Abscheidung, mit Hilfe Sputterverfahren, erzeugt wird. Auf diese Lagermetallschicht 3 kann die erfindungsgemäße Polymerschicht 4 ebenfalls mit aus dem Stand der Technik bekannten Verfahren, wie z.B. Sprühverfahren oder Streichverfahren, erzeugt werden, wobei diese Polymerschicht abschließend noch wärmebehandelt werden kann. Entsprechende Vorbehandlungen sind ebenfalls aus dem Stand der Technik bekannt, sodass sich eine weitere Erörterung an dieser Stelle erübrigt.

Die erfindungsgemäße Polymerschicht 4 eignet sich insbesondere auch zur Ausrüstung von Lagerelementen 1 für Motoren, wobei diese Polymerschicht 4 als Schutzschicht bzw. "Verpackungsschicht" verwendet wird, um eine Materialübertragung von der Welle auf das Lagermetall bzw. Lagerelement 1 und damit eine Mikroverschweißung, welche infolge zum Ausfall des Motors führt, zu vermeiden. Um diese Wirkung zu erzielen bzw. zu verstärken, ist es auch möglich, die Welle selbst mit der Polymerschicht 4 zu beschichten. Generell kann also die Polymerschicht 4 als so genannte Schutzschicht gegen diese Mikroverschweißung, verursacht durch Materialübertragung von einem gelagerten Bauteil auf ein entsprechendes Lagerbauteil verwendet werden.

Der Ordnung halber sei abschließend darauf hingewiesen, dass zum besseren Verständnis des Aufbaus Lagerelementes 1 dieses bzw. dessen Bestandteile teilweise unmaßstäblich und/oder vergrößert und/oder verkleinert dargestellt wurden.

### Bezugszeichenaufstellung

- 1: Lagerelement
- 2: Stützkörper
- 3: Lagermetallschicht
- 4: Polymerschicht

## Patentansprüche

1. Lagerelement (1) mit einem metallischen Stützkörper (2), einer darüber angeordneten Lagermetallschicht (3) sowie einer über dieser angeordneten Polymerschicht (4), wobei die Polymerschicht (4) ein Polyamidimidharz, Molybdändisulfid (MoS₂) und Graphit umfasst, wobei die Polymerschicht (4) direkt auf der Lagermetallschicht angeordnet ist **dadurch gekennzeichnet, dass** die Polymerschicht (4) aus einem Gleitlack gebildet ist, der in nassem Zustand aus 60 Gew.-% bis 80 Gew.-% Polyamidimidharz, 15 Gew.-% bis 25 Gew.-% Molybdändisulfid (MoS₂) und 5 Gew.-% bis 15 Gew.-% Graphit besteht, wobei der nasse Polyamidimidharzanteil von 60 Gew.-% bis 80 Gew.-% einen Anteil von 40 Gew.-% bis 80 Gew.-% eines organischen Lösungsmittels, wie z.B. Xylol, enthält.

2. Lagerelement nach Anspruch 1, **dadurch gekennzeichnet, dass** der Gleitlack eine trockene Zusammensetzung von 35 Gew.-% Polyamidimidharz, 45 Gew.-% MoS₂ und 20 Gew.-% Graphit aufweist.

3. Lagerelement (1) nach Anspruch 1 oder 2, **dadurch gekennzeichnet, dass** MoS₂ Plättchen mit einer mittleren Länge ausgewählt aus einem Bereich mit einer unteren Grenze von 10 µm und einer oberen Grenze von 40 µm und einer mittleren Breite ausgewählt aus einem Bereich mit einer unteren Grenze von 10 µm und einer oberen Grenze von 40 µm und einer mittleren Höhe ausgewählt aus einem Bereich mit einer unteren Grenze von 2 nm und einer oberen Grenze von 20 nm enthalten sind.

4. Lagerelement (1) nach einem der Ansprüche 1 bis 3, **dadurch gekennzeichnet, dass** der Graphit mit einer Korngröße enthalten ist, ausgewählt aus einem Bereich mit einer unteren Grenze von 2 µm und einer oberen Grenze von 8 µm.

5. Lagerelement (1) nach einem der Ansprüche 1 bis 4, **dadurch gekennzeichnet, dass** die Lagermetallschicht (3) durch eine Legierung gebildet ist, ausgewählt aus einer Gruppe umfassend Aluminiumbasislegierungen, Zinnbasislegierungen, Bleibasislegierungen, Kupferbasislegierungen, CuPb-Basislegierungen, AlSn-Basislegierungen, Legierungen auf AlZn-, AlSi-, AlSnSi-, CuAl-, CuSn-, CuZn-, CuSnZn-, CuZnSn-, CuBi- sowie AlBi-Basis.

6. Lagerelement (1) nach einem der Ansprüche 1 bis 5, **dadurch gekennzeichnet, dass** die Lagermetallschicht (3) direkt auf dem Stützkörper (2) angeordnet ist.

7. Lagerelement (1) nach einem der Ansprüche 1 bis 6, **dadurch gekennzeichnet, dass** eine Oberfläche der Polymerschicht (4) einen arithmetischen Mittenrauwert Ra nach DIN EN ISO 4287 aufweist, ausgewählt aus einem Bereich mit einer unteren Grenze von 0,2 µm und einer oberen Grenze von 1,5 µm.

8. Lagerelement (1) nach einem der Ansprüche 1 bis 7, **dadurch gekennzeichnet, dass** eine Oberfläche der Polymerschicht (4) eine maximale Rauheitsprofilhöhe Rz nach DIN EN ISO 4287 aufweist, ausgewählt aus einem Bereich mit einer unteren Grenze von 0,5 µm und einer oberen Grenze von 10 µm.

9. Lagerelement (1) nach einem der Ansprüche 1 bis 8, **dadurch gekennzeichnet, dass** die Polymerschicht (4) eine mittlere Dicke aufweist, ausgewählt aus einem Bereich mit einer unteren Grenze von 1 µm und einer oberen Grenze von 40 µm.

10. Lagerelement (1) nach einem der Ansprüche 1 bis 9, **dadurch gekennzeichnet, dass** die Polymerschicht (4) eine Härte nach Vickers aufweist, ausgewählt aus einem Bereich mit einer unteren Grenze von 20 HV und einer oberen Grenze von 45 HV.

11. Lagerelement (1) nach einem der Ansprüche 1 bis 10, **dadurch gekennzeichnet, dass** Polywidiwidlearzes dieses als Gleitlagerhalbschale oder Anlaufring oder Lagerbuchse ausgebildet ist.

12. Motor mit einer Welle die von zumindest einem Lagerelement (1) gelagert ist, wobei das Lagerelement (1) zumindest einen metallischen Stützkörper (2) und eine darüber angeordnete Lagermetallschicht (3) umfasst, wobei zur Verhinderung der Materialübertragung von der Welle auf das Lagerelement (1) bei stehender Welle auf der Lagermetallschicht (3) und/oder der Welle eine Polymerschicht (4) angeordnet ist, **dadurch gekennzeichnet, dass** die Polymerschicht (4) aus einem Gleitlack gebildet ist, der in nassem Zustand aus 60 Gew.-% bis 80 Gew.-% Polyamidimidharz, 15 Gew.-% bis 25 Gew.-% Molybdändisulfid (MoS₂) und 5 Gew.-% bis 15 Gew.-% Graphit besteht, wobei der nasse Polyamidimidharzanteil von 60 Gew.-% bis 80 Gew.-% einen Anteil von 40 Gew.-% bis 80 Gew.-% eines organischen Lösungsmittels, wie z.B. Xylol, enthält.

13. Motor nach Anspruch 13, **dadurch gekennzeichnet, dass** das Lagerelement (1) nach einem der Ansprüche 1 bis 11 gebildet ist.

## Claims

1. Bearing element (1) with a metallic support body (2), a bearing metal layer (3) arranged over the top and a polymer layer (4) arranged on top of the latter, and the polymer layer (4) comprises a polyimide resin, molybdenum disulphide (MoS₂) and graphite, and the polymer layer (4) is applied directly onto the bearing metal layer, **characterised in that** the polymer layer (4) is provided in the form of an anti-friction lacquer which, in the wet state, comprises 60 % by weight to 80 % by weight polyamide imide resin, 15 % by weight to 25 % by weight molybdenum disulphide (MoS₂) and 5 % by weight to 15 % by weight graphite, and the proportion of wet polyamide imide resin comprising 60 % by weight to 80 % by weight contains a proportion of 40 % by weight to 80 % by weight of an organic solvent, such as xylene for example.

2. Bearing element as claimed in claim 1, **characterised in that** the anti-friction lacquer has a dry composition of 35 % by weight polyamide imide resin, 45 % by weight MoS₂ and 20 % by weight graphite.

3. Bearing element (1) as claimed in claim 1 or 2, **characterised in that** MoS₂ platelets are used with an average length selected from a range with a lower limit of 10 µm an upper limit of 40 µm and an average width selected from a range with a lower limit of 10 µm and an upper limit of 40 µm and an average height selected from a range with a lower limit of 2nm and an upper limit of 20 nm.

4. Bearing element (1) as claimed in one of claims 1 to 3, **characterised in that** the graphite included has a particle size selected from a range with a lower limit of 2 µm and an upper limit of 8 µm.

5. Bearing element (1) ass claimed in one of claims 1 to 4, **characterised in that** the bearing metal layer (3) is in the form of an alloy, selected from a group comprising aluminium base alloys, tin base alloys, lead base alloys, copper base alloys, CuPb base alloys, AlSn base alloys, alloys based on AlZn, AlSi, AlSnSi, CuAl, CuSn, CuZn, CuSnZn, CuZnSn, CuBi and AlBi.

6. Bearing element (1) as claimed in one of claims 1 to 5, **characterised in that** the bearing metal layer (3) is disposed directly on the support body (2).

7. Bearing element (1) as claimed in one of claims 1 to 6, **characterised in that** a surface of the polymer layer (4) has an arithmetic average roughness Ra according to DIN EN ISO 4287 selected from a range with a lower limit of 0.2 µm and an upper limit of 1.5 µm.

8. Bearing element (1) as claimed in one of claims 1 to 7, **characterised in that** a surface of the polymer layer (4) has a maximum roughness profile Rz according to DIN EN ISO 4287 selected from a range with a lower limit of 0.5 µm and an upper limit of 10 µm.

9. Bearing element (1) as claimed in one of claims 1 to 8, **characterised in that** the polymer layer (4) has an average thickness selected from a range with a lower limit of 1 µm and an upper limit of 40 µm.

10. Bearing element (1) as claimed in one of claims 1 to 9, **characterised in that** the polymer layer (4) has a Vickers hardness selected from a range with a lower limit of 20 HV and an upper limit of 45 HV.

11. Bearing element (1) as claimed in one of claims 1 to 10, **characterised in that** it is designed as a lubricated bearing half-shell or a thrust ring or a bearing bush.

12. Motor with a shaft which is mounted by at least one bearing element (1), which bearing element (1) comprises at least one metallic support body (2) and a bearing metal layer (3) disposed on top, and to prevent the transfer of material from the shaft to the bearing element (1) when the shaft is upright a polymer layer (4) is disposed is disposed on the bearing metal layer (3) and/or the shaft, **characterised in that** the polymer layer (4) is provided in the form of an anti-friction lacquer which, in the wet state, comprises 60 % by weight to 80 % by weight polyamide imide resin, 15 % by weight to 25 % by weight molybdenum disulphide (MoS₂) and 5 % by weight to 15 % by weight graphite, and the proportion of wet polyamide imide resin comprising 60 % by weight to 80 % by weight contains a proportion of 40 % by weight to 80 % by weight of an organic solvent, such as xylene for example.

13. Motor as claimed in claim 13, **characterised in that** the bearing element (1) is as claimed in one of claims 1 to 11.

## Revendications

1. Élément de coussinet (1) avec un corps de soutien métallique (2), une couche de métal antifriction (3) disposée au-dessus, ainsi qu'une couche de polymère (4) disposée au-dessus de cette dernière, la couche de polymère (4) comprenant une résine de polyamidimide, du bisulfure de molybdène (MoS₂) et du graphite, la couche de polymère (4) étant disposée directement sur la couche de métal antifriction, **caractérisé en ce que** la couche de polymère (4) est formée d'une laque antifriction qui, à l'état humide, consiste en 60 % en poids à 80 % en poids de résine de polyamidimide, en 15 % en poids à 25 % en poids de bisulfure de molybdène (MoS₂) et en 5 % en poids à 15 % en poids de graphite, la part de résine de polyamidimide humide de 60 % en poids à 80 % en poids contenant une part de 40 % en poids à 80 % en poids d'un solvant organique comme par exemple du xylène.

2. Élément de coussinet (1) selon la revendication 1, **caractérisé en ce que** la laque antifriction présente une composition à l'état sec de 35 % en poids de résine de polyamidimide, 45 % en poids de MoS₂ et 20 % en poids de graphite.

3. Élément de coussinet (1) selon la revendication 1 ou 2, **caractérisé en ce que** des plaquettes de MoS₂ d'une longueur moyenne choisie dans un intervalle avec une limite inférieure de 10 µm et une limite supérieure de 40 µm et une largeur choisie dans un intervalle avec une limite inférieure de 10 µm et une limite supérieure de 40 µm et une hauteur choisie dans un intervalle avec une limite inférieure de 2 nm et une limite supérieure de 20 nm y sont contenues.

4. Élément de coussinet (1) selon l'une quelconque des revendications 1 à 3, **caractérisé en ce que** le graphite est contenu avec une granulométrie choisie dans un intervalle avec une limite inférieure de 2 µm et une limite supérieure de 8 µm.

5. Élément de coussinet (1) selon l'une quelconque des revendications 1 à 4, **caractérisé en ce que** la couche de métal antifriction (3) est formée par un alliage choisi parmi le groupe comprenant des alliages à base d'aluminium, des alliages à base d'étain, des alliages à base de plomb, des alliages à base du cuivre, des alliages à base de CuPb, des alliages à base d'AlSn, des alliages à base d'AlZn, d'AlSi, d'AlSnSi, de CuAl, de CuSn, de CuZn, de CuSnZn, de CuZnSn, de CuBi ainsi que d'AlBi.

6. Élément de coussinet (1) selon l'une quelconque des revendications 1 à 5, **caractérisé en ce que** la couche de métal antifriction (3) est disposée directement sur le corps de soutien (2).

7. Élément de coussinet (1) selon l'une quelconque des revendications 1 à 6, **caractérisé en ce qu'**une surface de la couche de polymère (4) présente une moyenne arithmétique de rugosité Ra selon DIN EN ISO 4287 choisie dans un intervalle avec une limite inférieure de 0,2 µm et une limite supérieure de 1,5 µm.

8. Élément de coussinet (1) selon l'une quelconque des revendications 1 à 7, **caractérisé en ce qu'**une surface de la couche de polymère (4) présente une hauteur maximale Rz du profil de rugosité selon DIN EN ISO 4287 choisie dans un intervalle avec une limite inférieure de 0,5 µm et une limite supérieure de 10 µm.

9. Élément de coussinet (1) selon l'une quelconque des revendications 1 à 8, **caractérisé en ce que** la couche de polymère (4) présente une épaisseur moyenne choisie dans un intervalle avec une limite inférieure de 1 µm et une limite supérieure de 40 µm.

10. Élément de coussinet (1) selon l'une quelconque des revendications 1 à 9, **caractérisé en ce que** la couche de polymère (4) présente une dureté selon Vickers choisie dans un intervalle avec une limite inférieure de 20 HV et une limite supérieure de 45 HV.

11. Élément de coussinet (1) selon l'une quelconque des revendications 1 à 10, **caractérisé en ce que** celui-ci est configuré comme demi-coussinet de palier lisse, ou comme bague de butée ou comme coussinet de palier.

12. Moteur avec un arbre qui est monté sur au moins un élément de coussinet (1), l'élément de coussinet (1) comprenant au moins un corps de soutien métallique (2) et un couche de métal antifriction (3) disposée au-dessus, sachant que pour empêcher des transferts de matière de l'arbre à l'élément de coussinet (1) quand l'arbre est immobile, une couche de polymère (4) est disposée sur la couche de métal antifriction (3) et/ou sur l'arbre, **caractérisé en ce que** la couche de polymère (4) est formée d'une laque antifriction qui, à l'état humide, consiste en 60 % en poids à 80 % en poids de résine de polyamidimide, en 15 % en poids à 25 % en poids de bisulfure de molybdène (MoS₂) et en 5 % en poids à 15 % en poids de graphite, la part de résine de polyamidimide humide de 60 % en poids à 80 % en poids contenant une part de 40 % en poids à 80 % en poids d'un solvant organique comme par exemple du xylène.

13. Moteur selon la revendication 12, **caractérisé en ce que** l'élément de coussinet (1) est configuré selon l'une quelconque des revendications 1 à 11.
